# EUROPÄISCHE PATENTSCHRIFT

(11) **EP 3 017 924 B1**
(45) Veröffentlichungstag und Bekanntmachung des Hinweises auf die Patenterteilung: **28.12.2016**
(21) Anmeldenummer: 14191988.6
(22) Anmeldetag: 06.11.2014
(51) Int. Cl.: B27N 1/00, B27N 3/00, B27N 3/18, B27N 3/24, B29C 70/02

(54) **Verfahren zur Herstellung einer Holzwerkstoffplatte, insbesondere eines Holz-Kunststoff-Komposits**
Method for manufacturing a wooden panel, in particular a wood-plastic composite
Procédé de fabrication d'une plaque en matériau dérivé du bois, notamment un composite constitué de bois/plastique

(43) Veröffentlichungstag der Anmeldung: 11.05.2016
(73) Patentinhaber: Flooring Technologies Ltd., Pieta PTA 9044 (MT)
(72) Erfinder: Kalwa, Norbert, 32805 Horn-Bad Meinberg (DE); Siems, Jens, 17139 Malchin (DE); Lehnhoff, Ingo, 18347 Dierhagen (DE)
(74) Vertreter: Maikowski & Ninnemann Patentanwälte Partnerschaft mbB

(56) Entgegenhaltungen:
- EP-A1- 0 195 128
- EP-A1- 2 027 979
- EP-A2- 1 769 894
- DE-A1-102008 039 720
- DE-U1- 20 023 167
- GB-A- 1 590 487
- US-A1- 2004 028 958
- US-A1- 2007 042 664

## Beschreibung

Die vorliegende Erfindung betrifft ein Verfahren zur Herstellung einer Holzwerkstoffplatte, insbesondere in Form eines Holz-Kunststoff-Komposits nach Anspruch 1.

### Beschreibung

Die Verwendung von Holzwerkstoffplatten, z.B. in Form von Holzfaserplatten in unterschiedlichen Ausgestaltungen zur Verwendung als Fußbodenlaminat oder zur Verkleidung von Wänden oder auch bei der Herstellung von Möbeln ist seit langem bekannt. So werden beispielsweise Holzfaserplatten in Form von mitteldichten Holzfaserplatten (MDF-Platten), hochdichten Holzfaserplatten (HDF-Platten), Spanplatten oder OSB-Platten (oriented strand board) verwendet, welche durch Verpressen entsprechender Holzfasern oder Späne mit einem duroplastischen Kunststoffharz als Bindemittel gewonnen werden.

Ein besonderes Problem bei der Verwendung der genannten Holzfaserplatten besteht in der Empfindlichkeit der eingesetzten Holzfasern oder Holzspäne gegenüber hohen Luftfeuchten und direktem Wasserkontakt. Während dieses Problem bei Möbeln oder Produkten für den Innenausbau durch konstruktive oder technologische Maßnahmen relativ leicht beherrscht werden kann, ist dies bei Bodenbelägen z.B. Fussbodenlaminaten auf der Basis von Holz oder Holzwerkstoffen häufig deutlich problematischer.

Bodenbeläge auf der Basis von Holz oder Holzwerkstoffplatten wie Laminatbodern oder Fertigparkett reagieren auf Wasserkontakt schnell mit Quellungen und/oder Dimensionsänderungen. Dies wird u.a. durch Einwirkungen von Pflegemitteln auf Wasserbasis hervorgerufen, welche teilweise sehr häufig und sehr intensiv verwendet werden. Auch können hohe Luftfeuchten vergleichbare Prozesse auslösen. Darüber hinaus steht der Bodenbelag typischerweise auch in einem direkten Kontakt mit den Gebäudeteilen wie z.B. Betondecken/Estrich oder Wänden, die ebenfalls Feuchtigkeit in dem Bodenbelag transportieren können. Aus diesem Grund wird bei der Herstellung der obengenannten Holzwerkstoffprodukte auf quellarme Hölzer oder Holzwerkstoffe zurückgegriffen, was zwar die beschriebenen Probleme mindern, aber nicht gänzlich verhindern kann. Teilweise kommen auch anorganische Trägerplatten zur Herstellung von Produkten mit Holzoberflächen zum Einsatz, wobei es hier zu Verklebungs-, Bearbeitungs- oder Verlegeproblemen kommen kann.

Als Alternative zur Verwendung von Laminatböden mit dem genannten Quellungsproblem wurden in der Vergangenheit zunehmend Fußbodenlaminate auf Basis von Polyvinylchlorid (PVC) eingesetzt, die ein sehr geringes bis gar kein Quellverhalten aufweisen. Nachteilig bei der Verwendung von PVC-Fußböden ist allerdings deren hohe Kratzanfälligkeit und Kriechneigung, was insbesondere in hochfrequentierten Bereichen (wie z.B. Verkaufsbereichen) zu einer schnellen Abnutzung und Unansehnlichkeit des Fußbodenbelages führt.

Aus diesen Gründen hat man in der Vergangenheit häufig sogenannte wood-plastic-composits (WPC) als Trägermaterialien für Holzprodukte verwendet. Diese Trägermaterialien besitzen eine sehr geringe Quellung von weniger als 3% und eine hohe Dimensionsstabilität.

WPCs sind thermoplastisch verarbeitbare Verbundwerkstoffe auf der Basis von Holzmehl oder Holzspänen und thermoplastischen Kunststoffen, welchen ggf. noch weitere Additive zugesetzt werden können. Die Gemische aus Holzfasern und Thermoplasten werden aufgeschmolzen und zu Agglomeraten verarbeitet. Im weiteren Herstellungsprozess werden die Agglomerate in Extrudern aufgeschmolzen und zu relativ kleinformatigen Platten verarbeitet. Die Breite der Platten liegt hierbei meist in einem Bereich von weniger als einem Meter bedingt durch den Herstellungsprozess in einem Extruder. Auch liegt die Produktivität pro Stunde in einem niedrigen einstelligen Quadratmeterbereich, so dass die Kombination aus niedriger Produktivität und begrenzter Plattengröße relativ hohe Kosten der so hergestellten WPC-Platten begründet.

Auch die Tatsache, dass die Holzkomponente auf eine Feuchte auf unter 5 Gew%, besser sogar auf unter 1 Gew% getrocknet werden muss, sorgt ebenfalls nicht für niedrige Kosten. Höhere Feuchten führen zu Wasserdampfbildung im Prozess und damit zu Blasenbildung im Produkt. Ein weiterer gravierender Nachteil ist, dass das eingesetzte Holz frei von Sand bzw. Mineralien sein muss. Derartige Störstoffe würden sonst das Extrusionswerkzeug zerstören.

Das Dokument US-A1-20070042664 beschreibt die Herstellung eines faserhaltigen Komposits, wobei das Komposit aus Bastfasern und Bindefasern, zum Beispiel in Form von Bikomponentenfasern, besteht.

Entsprechend ergeben sich hieraus die Nachteile einer niedrigen Produktivität, begrenzten Plattengröße und einem somit teurem Verfahren.

Der vorliegenden Erfindung liegt daher die technische Aufgabe zugrunde, die beschriebenen Nachteile zu beheben und Holzwerkstoffplatten mit einer geringen Quellung von z.B. weniger als 3% in variableren und größeren Formaten und mit einer höheren Produktivität zur Verfügung zu stellen. Diese Holzwerkstoffplatten sollen anschließend als Trägerplatten u.a. zur Herstellung von Produkten für Anwendungen mit erhöhtem Feuchtaufkommen verwendet werden.

Diese Aufgabe wird mit einem Verfahren zur Herstellung von Holzwerkstoffplatten nach Anspruch 1 gelöst.

Entsprechend wird ein Verfahren zur Herstellung einer Holzwerkstoffplatte, insbesondere in Form eines Holz-Kunststoff-Komposits, bereitgestellt, welche die folgenden Schritte umfasst:
- Aufbringen eines Gemisches aus Holzpartikeln und Kunststoff auf ein erstes Transportband unter Ausbildung eines Vorvlieses und Einführen des Vorvlieses in mindestens einen ersten Temperofen zum Vorverdichten;
- Überführen des vorverdichteten Vorvlieses in mindestens eine Doppelbandpresse zum weiteren Verdichten zu einer Holzwerkstoffplatte; und
- Abkühlen der verdichteten Holzwerkstoffplatte in mindestens einer Kühlpresse.

Es wird demnach ein mehrstufiger Prozess, insbesondere ein dreistufiger Prozess bereitgestellt, in welchem zunächst aus einem Gemisch von Holzpartikeln, z.B. in Form von Holzfasern, und Kunststoffen, insbesondere thermoplastischen Kunststoffen, ein Vorvlies bzw. eine Dämpfstoffmatte mit einer niedrigen Rohdichte hergestellt wird. Dieses Vorvlies bzw. Dämpfstoffmatte mit einer niedrigen Rohdichte wird anschließend zunächst auf einer Doppelbandpresse unter hohem Druck und hoher Temperatur verdichtet und anschließend in einer Kühlpresse abgekühlt. Das vorliegende Verfahren ermöglicht die Herstellung von Holzwerkstoffplatten in Form von Holz-Kunststoff-Kompositen (WPCs) in großen Formaten, die sich zur Herstellung von Trägerplatten zur Verwendung als Fußbodenlaminate eignen, verbunden mit einer hohen Produktivität und somit niedrigeren Kosten.

In einer Ausführungsform des vorliegenden Verfahrens wird ein thermoplastischer Kunststoff, insbesondere in Form von thermoplastischen Granulaten oder Kunststofffasern in dem Holzpartikel-Kunststoff-Gemisch verwendet.

Der thermoplastische Kunststoff ist bevorzugter Weise ausgewählt aus einer Gruppe enthaltend Polyethylen (PE), Polypropylen (PP), Polyvinylchlorid (PVC), Polyester, Polyethylenterephthalat (PET), Polyamid (PA), Polystyrol (PS), Acrylnitril-Butadien-Styrol (ABS), Polymethylmethacrylat (PMMA), Polycarbonat (PC), Polyetheretherketon (PEEK), Polyisobutylen (PIB), Polybutylen (PB), Mischungen oder Copolymerisate davon. Insbesondere ist es bevorzugt, wenn als thermoplastischer Kunststoff PE, PP, PVC oder eine Mischung davon eingesetzt wird.

Wie oben erwähnt, kann der thermoplastische Kunststoff in Form von Kunststofffasern eingesetzt werden. Die Kunststofffasern können dabei als Monokomponentenfasern oder als Bikomponentenfasern vorliegen. Die thermisch aktivierbaren Kunststoff- bzw. Bindefasern führen in der Matrix aus Holzfasern bzw. Holzpartikel sowohl eine Binde- als auch eine Stützfunktion aus. Werden Monokomponentenfasern verwendet, bestehen diese bevorzugt aus Polyethylen oder anderen thermoplastischen Kunststoffen mit niedrigem Schmelzpunkt.

Bikomponentenfasern (auch als Biko-Stützfasern bezeichnet) werden besonders bevorzugt eingesetzt. Biko-Fasern erhöhen die Steifigkeit von Holzfaserplatten und verringern auch die bei thermoplastischen Kunststoffen (wie z.B. PVC-Laminaten) anzutreffende Kriechneigung.

Die Biko-Fasern bestehen typischerweise aus einem Tragfilament oder auch einer Kernfaser aus einem Kunststoff mit höherer Temperaturbeständigkeit, insbesondere Polyester oder Polypropylen, die von einem Kunststoff mit einem niedrigeren Schmelzpunkt, insbesondere aus Polyethylen, umhüllt bzw. ummantelt sind. Die Hülle bzw. der Mantel der Biko-Fasern ermöglicht nach Aufschmelzen bzw. Anschmelzen eine Vernetzung der Holzpartikel miteinander. Vorliegend werden insbesondere als Bikomponentenfasern solche auf der Basis von Thermoplasten wie PP/PE, Polyester/PE oder Polyester/Polyester verwendet.

In einer weiteren Ausführungsform des vorliegenden Verfahrens wird ein Holzpartikel-Kunststoff-Gemisch verwendet, welches ein Mischungsverhältnis von Holzpartikeln zu Kunststoff zwischen 90 Gew% Holzpartikel : 10 Gew% Kunststoffe und 20 Gew% Holzpartikel : 80 Gew% Kunststoffe, bevorzugt zwischen 70 Gew% Holzpartikel : 30 Gew% Kunststoffe und 40 Gew% Holzpartikel : 60 Gew% Kunststoffe umfasst. Das verwendete Holzpartikel-Kunststoffgemisch kann beispielhaft 44 Gew% Holzfasern bzw. Holzpartikel und 56 Gew% Biko-Fasern, z.B. Polyethylenterephthalat/ Polyethylenterephtelat-Coisophtalat-Fasern oder PP/PE-Fasern aufweisen.

Es ist ebenfalls vorstellbar, dass der Kunststoffanteil selbst auch ein Gemisch von verschiedenen Kunststoffen ist. So kann ein Kunststoffgemisch aus 20 Gew.% BiKomponentenfasern : 80 Gew% PE-Fasern bis zu 80 Gew.% Bikomponentenfasern : 20 Gew% PE-Fasern bestehen. Generell sind auch andere Zusammensetzungen möglich. Durch die Veränderung der Zusammensetzung der Kunststoffkomponente kann die zur Verdichtung des Vorvlieses bzw. Vlieses benötigte Temperatur verändert und angepasst werden.

Unter den vorliegend veränderten Holzpartikeln sind lignocellulosehaltige Zerkleinerungsprodukte wie z.B. Holzfasern, Holzspäne oder auch Holzmehl zu verstehen. Im Falle der Verwendung von Holzfasern kommen insbesondere trockene Holzfasern mit einer Länge von 1,0 mm bis 20 mm, bevorzugt 1,5 mm bis 10 mm und einer Dicke von 0,05 mm bis 1 mm zum Einsatz. Die Holzfaserfeuchte der verwendeten Fasern liegt dabei in einem Bereich zwischen 5 und 15 %, bevorzugt 6 und 12 % bezogen auf das Gesamtgewicht der Holzfasern.

Es ist ebenfalls möglich, die verwendeten Holzpartikel in Bezug auf den mittleren Korndurchmesser zu bestimmen, wobei der mittlere Korndurchmesser d50 zwischen 0,05 mm und 1 mm, bevorzugt 0,1 und 0,8 mm betragen kann.

Entsprechend der gewünschten Zusammensetzung des Holzpartikel-Kunststoff-Gemisches werden die einzelnen Komponenten (Holzpartikel und Kunststoff) in einem Mischer innig vermischt. Das Vermischen der Komponenten kann z.B. durch Eingeben in eine Blasleitung erfolgen. Hier erfolgt auf dem Weg von der Zugabe der Komponenten bis zum Vorratsbehälter eine intensive Vermischung durch die eingeblasene Luft als Transportmittel. Die intensive Vermischung der Komponenten wird im Vorratsbehälter durch die eingeblasene Transportluft noch fortgesetzt.

Aus dem Vorratsbehälter wird das Holzpartikel-Kunststoff-Gemisch, z.B. nach Abwiegen auf einer Flächenwaage, auf ein erstes Transportband über seine Breite gleichmäßig aufgeblasen. Die Menge an zugeführten Holzpartikel-Kunststoff-Gemisch richtet sich nach der gewünschten Schichtdicke und der gewünschten Rohdichte des herzustellenden Vorvlieses. Typische Flächengewichte des gestreuten Vorvlieses können dabei in einem Bereich zwischen 3.000 und 10.000 g/m², bevorzugt zwischen 5.000 bis 7.000 g/m², liegen. Wie bereits erwähnt wird die Breite des gestreuten Vorvlieses durch die Breite des ersten Transportbandes bestimmt, und kann z.B. in einem Bereich bis zu 3.000 mm, bevorzugt 2.800 mm, insbesondere bevorzugt bis zu 2.500 mm liegen.

Nach dem Aufbringen des Holzpartikel-Kunststoff-Gemisches auf ein erstes Transportband unter Ausbildung eines Vorvlies wird das Vorvlies in mindestens einem ersten Temperofen zum Vorverdichten eingeführt. In einer besonders bevorzugten Ausführungsform des Verfahrens wird das Vorvlies aus Holzpartikeln und Kunststoff in dem mindestens einen Temperofen auf eine Temperatur erhitzt, die der Schmelztemperatur des verwendeten Kunststoffes entspricht oder darüber liegt.

Die Temperaturen im Temperofen können zwischen 130 und 200°C, bevorzugt 150 und 180 °C, insbesondere bevorzugt 160 und 170 °C liegen. Die Kerntemperatur des Vorvlieses liegt bevorzugt in einem Bereich zwischen 100 und 150°C., insbesondere bevorzugt bei ca. 130°C,. Während des Erhitzens im Temperofen erfolgt ein Anschmelzen des Kunststoffmaterials, wodurch eine innige Verbindung zwischen dem Kunststoffmaterial wie z.B. den Kunststofffasern mit den Holzfasern hervorgerufen wird und gleichzeitig eine Verdichtung des Vorvlieses erfolgt. Dabei gilt, je höher die Kerntemperatur des Vorvlieses desto schneller kann die Presse gefahren werden, da der Verdichtungsprozess beschleunigt wird.

Die Temperaturen im Temperofen werden beispielsweise durch eingeblasene Heißluft erhalten.

In einer weiteren Ausführungsform des vorliegenden Verfahrens weist das vorverdichtete Vorvlies nach Austritt aus dem Temperofen eine Rohdichte (bzw. ein Raumgewicht) zwischen 40 und 200 kg/m³, bevorzugt 60 und 150 kg/m³, insbesondere bevorzugt zwischen 80 und 120 kg/m³ auf. Die Dicke des vorverdichteten Vorvlies kann dabei zwischen 20 und 100 mm, bevorzugt 30 und 50 mm, insbesondere bevorzugt 35 und 45 mm liegen.

Es ist insbesondere bevorzugt, wenn der Vorschub des Förderbandes bzw. Transportbandes im Temperofen in einem Bereich zwischen 5 und 15 m/min, bevorzugt zwischen 6 und 12 m/min liegt.

Nach dem Verlassen des Temperofens kann das vorverdichtete Vorvlies abgekühlt und konfektioniert werden. Typische Konfektionierungsmaßnahmen sind z.B. die Besäumung des Vorvlieses der dabei anfallende Abfall, insbesondere die anfallenden Randstreifen, können verkleinert werden und in den Verfahrensprozess zurückgeführt werden. Da das gewünschte Mischungsverhältnis gegeben ist, kann das Material direkt in den Vorratsbehälter eingespeist werden.

In einer weiteren Variante des vorliegenden Verfahrens wird das vorverdichtete Vorvlies in der mindestens einen Doppelbandpresse auf eine Dicke zwischen 2 und 20 mm, bevorzugt 4 und 15 mm, insbesondere bevorzugt 5 und 10 mm verdichtet.

Die während des Verdichtens des Vorvlieses in der mindestens einen Doppelbandpresse angelegte Temperatur liegt zwischen 150 und 250°C, bevorzugt 180 und 230°C, bevorzugt 200 und 220°C. Der in der mindestens einen Doppelbandpresse angewendete Druck kann zwischen 2 MPa und 10 MPa, bevorzugt 3 MPa und 8 MPa, insbesondere bevorzugt 5 und 7 MPa liegen. Der Vorschub der Doppelbandpresse beträgt zwischen 5 und 15 m/min, bevorzugt zwischen 6 und 12 m/min.

Nach Verlassen der mindestens einen Doppelbandpresse wird die die Doppelbandpresse verlassende verdichtete Holzwerkstoffplatte in mindestens eine Kühlpresse eingeführt, in welcher ein Abkühlen der verdichteten Holzwerkstoffplatte auf Temperaturen zwischen 10 und 100°C., bevorzugt 15 und 70°C, insbesondere bevorzugt 20 und 40°C erfolgt. Dabei wird in der mindestens einen Kühlpresse ein Druck angewendet, der identisch oder zumindest fast identisch ist zu dem Druck in der Doppelbandpresse, d.h. in der Kühlpresse herrscht ein Druck zwischen 2 MPa und 10 MPa, bevorzugt 3 MPa und 8 MPa, insbesondere bevorzugt 5 und 7 MPa.

Das Einführen der verdichteten Holzwerkstoffplatte in eine Kühlpresse ist notwendig, da die Rückstellkräfte der Fasern so groß sein können, dass die Platte ohne des Schritts des Kühlpressens nach dem Verdichten in der Doppelbandpresse wieder aufgehen würde.

Nach dem Verlassen der Kühlpresse weisen die verdichteten Holzwerkstoffplatten eine Dicke zwischen 2 und 15 mm, bevorzugt 3 und 12 mm, insbesondere bevorzugt 5 und 10 mm auf.

Die Rohdichte der verdichteten Holzwerkstoffplatten nach Verlassen der Kühlpresse liegt in einem Bereich zwischen 500 und 1500 kg/m³, bevorzugt zwischen 650 und 1300 kg/m³, insbesondere bevorzugt zwischen 800 und 1100 kg/m³.

Zur Herstellung einer Holzwerkstoffplatte mit einer Rohdichte von 850 kg/m³ wird z.B. vorteilhafterweiser ein Pressdruck in der Doppelbandpresse (und auch Kühlpresse) von 4,5 bis 5 MPa (45-50 bar) bei einer Presstemperatur in der Doppelbandpresse des Vorlaufes von 235 °C und einer Presstemperatur auf der Oberfläche der Platte von 220 °C angelegt. Im Falle der Herstellung einer Holzwerkstoffplatte mit einer Rohdichte von 950 kg/m³ wird vorteilhafterweiser ein Pressdruck in der Doppelbandpresse (und auch Kühlpresse) von 5,5 bis 6 MPa (55-60 bar) bei einer Presstemperatur in der Doppelbandpresse des Vorlaufes von 235°C und einer Presstemperatur auf der Oberfläche der Platte von 220°C angelegt.

Die mit dem vorliegenden Verfahren hergestellten Holzwerkstoffplatten bzw. Holz-Kunststoff-Komposite (WPC) sind durch eine Quellung von weniger als 5%, bevorzugt weniger als 3%, insbesondere bevorzugt weniger als 1 % gekennzeichnet.

Im Anschluss an die Herstellung der Holzwerkstoffplatten im Format von WPCs kann bevorzugt eine direkte Weiterverarbeitung der Platten zu geeigneten Dekorpaneelen bzw. Dekorlaminaten erfolgen. Dies kann z.B. durch Auftragen von dekorativen Folien oder auch ein Auftragen von Dekoren in Direktdruckverfahren erfolgen und die erhaltenen Dekore mit geeigneten Verschleißschichten versiegelt werden.

Gemäß einer weiteren Ausgestaltung kann es auch vorgesehen sein, dass die Holzwerkstoffplatte in Form eines WPC zumindest in einem Randbereich der Platte eine Profilierung aufweist, wobei das Profil beispielsweise die Einbringung eines Nut- und/oder Federprofils in eine Kante bzw. Seitenfläche der Holzwerkstoffplatte ermöglicht, wobei die so erhaltenen Paneele bzw. Holzwerkstoffplatten miteinander verbunden werden können und eine schwimmende Verlegung und Abdeckung eines Bodens ermöglichen.

In einer weiteren Ausführungsform des vorliegenden Verfahrens hat es sich als vorteilhaft erwiesen, dem Holzpartikel-Kunststoff-Gemisch vor dem Verdichten weitere Substanzen wie Füllstoffe oder Additive zuzugeben, die der Holzwerkstoffplatte spezielle Eigenschaften verleihen.

Als geeignete Additive können Flammenschutzmittel, lumineszierende oder antibakterielle Stoffe dem Holzpartikel-Kunststoff-Gemisch zugegeben werden. Geeignete Flammschutzmittel können ausgewählt sein aus der Gruppe enthaltend Phosphate, Borate, insbesondere Ammoniumpolyphosphat, Tris(tri-bromneopentyl)phospat, Zinkborat oder Borsäurekomplexe von mehrwertigen Alkoholen.

Weitere Additive können die UV-Beständigkeit, das Alterungsverhalten oder die elektrische Leitfähigkeit der Holzwerkstoffplatte beeinflussen. Zur Erhöhung der UV-Beständigkeit ist es z.B. bekannt, Kunststoffen sogenannte UV-stabilisierende Verbindungen wie die sogenannten HALS-Verbindungen zuzusetzen. Als Antifungizide und antibakterielle Mittel können u.a. Polyimine verwendet werden.

Auch ist es vorteilhaft, dem Holzpartikel-Kunststoff-Gemisch einen anorganischen Füllstoff zuzugeben. Als anorganischer Füllstoff können z.B. Materialien wie Talkum, Kreide, Titandioxid oder andere verwendet werden, die der Platte eine spezifische Färbung verleihen.

Die Erfindung wird nachfolgend unter Bezugnahme auf die Figur der Zeichnung an einem Ausführungsbeispiel näher erläutert. Es zeigt:

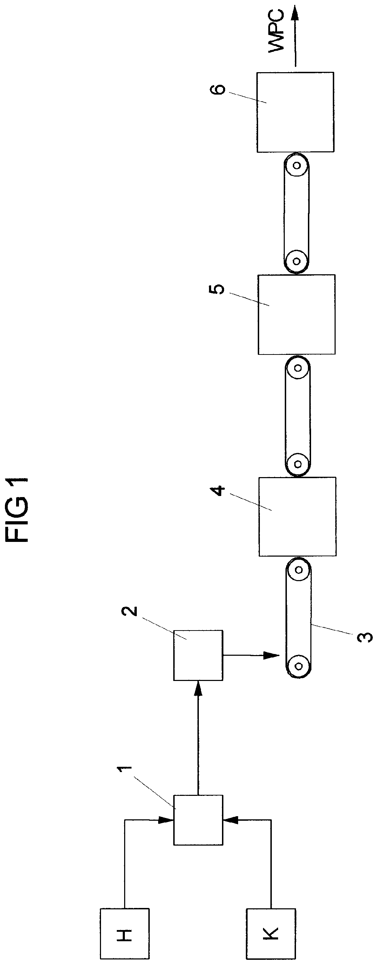

- Figur 1: eine schematische Darstellung einer Ausführungsform des erfindungsgemäßen Verfahrens.

Das in Figur 1 gezeigte Verfahrensschema umfasst eine Mischvorrichtung 1, in welche Holzfasern H und Kunststoff K, z.B. Biko-Fasern eingebracht werden. Die Mischvorrichtung 1 kann z.B. in Form einer Blasleitung vorliegen, in welcher durch die eingeblasene Luft eine intensive Vermischung der Holzfasern und Biko-Fasern erfolgt.

Aus der Mischvorrichtung 1 gelangt das Fasergemisch in eine Streuvorrichtung 2, aus welcher das Fasergemisch mechanisch ausgetragen wird und unter Bildung eines Vorvlieses auf ein Transportband 3 gestreut wird. Die Streuvorrichtung 2 kann z.B. in Form eines Walzenstreukopfes ausgebildet sein. Unterhalb des Transportbandes kann eine Waage z.B. in Form einer Bandwaage angeordnet sein, welche kontinuierlich das Gewicht des Vorvlieses ermittelt.

Das Transportband 3 führt das Vorvlies in einen Temperofen 4 z.B. in Form eines Durchströmungsofens mit einem Vorschub von bis zu 15 m/min ein. Im Temperofen erfolgt bei Temperaturen von bis zu 200°C ein Vorverdichten des Vorvlieses, wobei die Biko-Fasern angeschmolzen werden und eine Verbindung der Biko-Fasern mit den Holzfasern bewirkt wird. Die Dicke des den Temperofen verlassenen Vorvlieses kann zwischen 20 und 100 mm betragen.

Nach Verlassen des Temperofens 4 wird das vorverdichtete Vorvlies unmittelbar in eine Doppelbandpresse 5 mit einem Vorschub von bis zu 12 m/min eingeführt. In der Doppelbandpresse 5 erfolgt die weitere Verdichtung des Vlieses bzw. Vorvlieses bei einem Druck von z.B. 3 MPa und einer Temperatur von z.B. 220° auf eine Dicke zwischen 2 und 15 mm.

Nach dem Anschmelzen der Biko-Fasern muss der Verdichtungszustand der die Doppelbandpresse 5 verlassene Platte so lange konstant gehalten werden, bis die Biko-Fasern soweit abgekühlt sind, dass die Erweichungstemperatur der selbigen sicher unterschritten ist, um ein "Aufgehen" der verdichteten Platte bedingt durch die Rückstellkräfte der Biko-Fasern zu verhindern. Hierzu wird die die Doppelbandpresse 5 verlassene verdichtete Platte unmittelbar in eine Kühlpresse 6 eingeführt, in welcher eine Abkühlung der verdichteten Platte auf Temperaturen zwischen 15 und 40°C erfolgt. Die Kühlung der Kühlpresse kann z.B. mittels Wasserkühlung erfolgen.

Nach Verlassen der Kühlpresse 6 weist die verdichtete (WPC) Platte eine Dicke zwischen 2 und 12 mm und eine Rohdichte von z.B. 800 bis 1100 kg/m³ auf. Die WPC-Platte kann anschließend beliebig weiterverarbeitet werden (z.B. Auftragen von Dekorschichten) und konfektioniert werden.

### Ausführungsbeispiel

Aus Ballenöffnern wurden Holzfasern (44 Gew.%) und BiCo-Fasern (56 Gew.%, Polyethylenterephtalat/ Polyethylenterephtalat-Coisophtalat) in eine Mischvorrichtung gefördert. Anschließend wurde aus dem Gemisch der Fasern in einer Streuvorrichtung ein Vlies gebildet (Flächengewicht: 4.200g/m²), dass auf ein Förderband in einer Breite von 2.800 mm abgelegt wurde. Der Vorschub des Förderbands lag bei ca. 6 m/min.

Das Vlies wurde in einem Durchströmungsofen bei Temperaturen von bis zu 160°C auf eine Stärke von 35 mm vorverdichtet. Dabei erreichte das Vlies eine Kerntemperatur von ca. 130°C.

Direkt nach dem Durchströmungsofen wurde die Matte in einer Doppelbandpresse bei einer Produktionsgeschwindigkeit von 6 m/min auf eine Stärke von 5,2 mm verdichtet. Die Öltemperatur im Vorlauf der Doppelbandpresse lag bei 220 °C.

Hinter der Doppelbandpresse zur Verdichtung schloss sich eine Kühl-presse mit Wasserkühlung an, in der das WPC auf ca. 15- 40°C abgekühlt wurde. Aus dem Endlosstrang wurden im Anschluss daran Formate geschnitten (2.800 x 1.500 mm).

Die WPC-Formate wurden nach Abkühlung auf der Oberseite mit einer dekorativen Polypropylenfolie für Fussboden-Anwendungen und auf der Rückseite mit einem Gegenzug auf Basis eines geleimten Papiers beklebt. Aus den oben genannten Formaten wurden Fußbodendielen produziert, die an den Seitenflächen mit Verbindungsprofilen nach Art einer Nut und Feder ausgestattet werden. Die so erhaltenen Paneele sind zur Abdeckung eines Bodens geeignet und werden schwimmend verlegt.

## Patentansprüche

1. Verfahren zur Herstellung einer Holzwerkstoffplatte, insbesondere in Form eines Holz-Kunststoff-Komposits, umfassend die Schritte:
- Aufbringen eines Gemisches aus Holzfasern mit einer Holzfaserfeuchte zwischen 6 und 15% und Kunststoff mit einem Mischungsverhältnis zwischen 70 Gew% Holzfasern / 30 Gew% Kunststoff und 40 Gew% Holzfasern / 60 Gew% Kunststoff auf ein erstes Transportband unter Ausbildung eines Vorvlieses und Einführen des Vorvlieses in mindestens einen ersten Temperofen zum Vorverdichten;
- Überführen des vorverdichteten Vorvlieses in mindestens eine Doppelbandpresse zum weiteren Verdichten zu einer Holzwerkstoffplatte; und
- Abkühlen der verdichteten Holzwerkstoffplatte in mindestens einer Kühlpresse auf Temperaturen zwischen 10 und 70°C.

2. Verfahren nach Anspruch 1, **dadurch gekennzeichnet, dass** der Kunststoff ein thermoplastischer Kunststoff, insbesondere in Form von thermoplastischen Granulaten oder Kunststofffasern, vorliegt.

3. Verfahren nach Anspruch 1 oder 2, **dadurch gekennzeichnet, dass** als Kunststoff Bikomponentenfasern verwendet werden.

4. Verfahren nach einem der vorhergehenden Ansprüche, **dadurch gekennzeichnet, dass** als Kunststoff thermoplastische Kunststoffe ausgewählt aus der Gruppe enthaltend Polyethylen (PE), Polypropylen (PP), Polyvinylchlorid (PVC), Polyester, wie Polyethylenterephthalat, verwendet werden.

5. Verfahren nach einem der vorhergehenden Ansprüche, **dadurch gekennzeichnet, dass** das Vorvlies aus Holzpartikeln und Kunststoff in dem mindestens einen Temperofen bei Temperaturen zwischen 130 und 200°C, bevorzugt 150 und 180°C, insbesondere bevorzugt 160 und 170°C vorverdichtet wird.

6. Verfahren nach einem der vorhergehenden Ansprüche, **dadurch gekennzeichnet, dass** das vorverdichtete Vorvlies nach Austritt aus dem Temperofen eine Rohdichte (bzw. Raumgewicht) zwischen 40 und 200 kg/m³, bevorzugt 60 und 150 kg/m³, insbesondere bevorzugt zwischen 80 und 120 kg/m³ aufweist.

7. Verfahren nach einem der vorhergehenden Ansprüche, **dadurch gekennzeichnet, dass** das vorverdichtete Vorvlies nach dem Verlassen des Temperofens abgekühlt und konfektioniert wird:

8. Verfahren nach einem der vorhergehenden Ansprüche, **dadurch gekennzeichnet, dass** das vorverdichtete Vorvlies in der mindestens einen Doppelbandpresse auf eine Dicke zwischen 2 und 20 mm, bevorzugt 4 und 15 mm, insbesondere bevorzugt 5 und 10 mm verdichtet wird,

9. Verfahren nach einem der vorhergehenden Ansprüche, **dadurch gekennzeichnet, dass** das vorverdichtete Vorvlies in der mindestens einen Doppelbandpresse bei Temperaturen zwischen 150 und 250°C, bevorzugt 180 und 230°, bevorzugt 200 und 220°C verdichtet wird.

10. Verfahren nach einem der vorhergehenden Ansprüche, **dadurch gekennzeichnet, dass** das vorverdichtete Vorvlies in der mindestens einen Doppelbandpresse bei einem Druck zwischen 2 MPa und 10 MPa, bevorzugt 3 MPa und 8 MPa, insbesondere bevorzugt 5 und 7 MPa verdichtet wird.

11. Verfahren nach einem der vorhergehenden Ansprüche, **dadurch gekennzeichnet, dass** das die verdichtete Holzwerkstoffplatte in der mindestens einen Kühlpresse auf Temperaturen zwischen 20 und 40°C abgekühlt wird.

12. Verfahren nach einem der vorhergehenden Ansprüche, **dadurch gekennzeichnet, dass** die verdichtete Holzwerkstoffplatte in der mindestens einen Kühlpresse bei einem Druck abgekühlt wird, der identisch ist zu dem Druck in der Doppelbandpresse.

13. Verfahren nach einem der vorhergehenden Ansprüche, **dadurch gekennzeichnet, dass** die verdichteten Holzwerkstoffplatten nach Verlassen der Kühlpresse eine Dicke zwischen 2 und 15 mm, bevorzugt 3 und 12 mm, insbesondere bevorzugt 5 und 10 mm aufweisen.

14. Verfahren nach einem der vorhergehenden Ansprüche, **dadurch gekennzeichnet, dass** die verdichteten Holzwerkstoffplatten eine Rohdichte zwischen 500 und 1500 kg/m³, bevorzugt zwischen 650 und 1300 kg/m³, insbesondere bevorzugt zwischen 800 und 1100 kg/m³ aufweisen.

## Claims

1. Process for the production of a wooden board, in particular in the form of a wood-plastic composite, comprising the steps of:
- application of a mixture of wood fibres with a wood-fibre moisture content of from 6 to 15% and plastic with a mixing ratio of from 70% by weight of wood fibres / 30% by weight of plastic to 40% by weight of wood fibres / 60% by weight of plastic to a first conveyor belt with formation of a preliminary web and introduction of the preliminary web into at least one first heat-conditioning oven for precompaction;
- transfer of the precompacted preliminary web into at least one twin-belt press for further compaction to give a wooden board; and
- cooling of the compacted wooden board in at least one cooling press to temperatures of from 10 to 70°C.

2. Process according to Claim 1, **characterized in that** the plastic is a thermoplastic, in particular in the form of thermoplastic granulates or synthetic fibres.

3. Process according to Claim 1 or 2, **characterized in that** plastic used comprises bicomponent fibres.

4. Process according to any of the preceding claims, **characterized in that** plastic used comprises thermoplastics selected from the group comprising polyethylene (PE), polypropylene (PP), polyvinyl chloride (PVC), or polyester, such as polyethylene terephthalate.

5. Process according to any of the preceding claims, **characterized in that** the preliminary web made of wood particles and plastic is precompacted in the at least one heat-conditioning oven at temperatures of from 130 to 200°C, preferably from 150 to 180°C, with particular preference from 160 to 170°C.

6. Process according to any of the preceding claims, **characterized in that** the envelope density of the precompacted preliminary web after discharge from the heat-conditioning oven is from 40 to 200 kg/m³, preferably from 60 to 150 kg/m³, with particular preference from 80 to 120 kg/m³.

7. Process according to any of the preceding claims, **characterized in that** after leaving the heat-conditioning oven the precompacted preliminary web is cooled and subjected to finishing processes.

8. Process according to any of the preceding claims, **characterized in that** in the at least one twin-belt press the precompacted preliminary web is compacted to a thickness of from 2 to 20 mm, preferably from 4 to 15 mm, with particular preference from 5 to 10 mm.

9. Process according to any of the preceding claims, **characterized in that** in the at least one twin-belt press the precompacted preliminary web is compacted at temperatures of from 150 to 250°C, preferably from 180 to 230°, preferably from 200 to 220°C.

10. Process according to any of the preceding claims, **characterized in that** in the at least one twin-belt press the precompacted preliminary web is compacted at a pressure of from 2 MPa to 10 MPa, preferably from 3 MPa to 8 MPa, with particular preference from 5 to 7 MPa.

11. Process according to any of the preceding claims, **characterized in that** in the at least one cooling press the compacted wooden board is cooled to temperatures of from 20 to 40°C.

12. Process according to any of the preceding claims, **characterized in that** in the at least one cooling press the compacted wooden board is cooled at a pressure which is the same as the pressure in the twin-belt press.

13. Process according to any of the preceding claims, **characterized in that** the thickness of the compacted wooden boards after leaving the cooling press is from 2 to 15 mm, preferably from 3 to 12 mm, with particular preference from 5 to 10 mm.

14. Process according to any of the preceding claims, **characterized in that** the envelope density of the compacted wooden boards is from 500 to 1500 kg/m³, preferably from 650 to 1300 kg/m³, with particular preference from 800 to 1100 kg/m³.

## Revendications

1. Procédé destiné à fabriquer un panneau en un matériau dérivé du bois, notamment sous la forme d'un composite bois-matière plastique, comprenant les étapes :
- de l'application d'un mélange de fibres de bois présentant une humidité des fibres de bois comprise entre 6 et 15 % et de matière plastique avec un rapport de mélange compris entre 70 % en poids de fibres de bois / 30 % en poids de matière plastique et 40 % en poids de fibres de bois / 60 % en poids de matière plastique sur une première bande de transport en formant un précurseur non-tissé et introduction du précurseur non-tissé dans au moins un premier four à recuire pour le pré-compactage;
- du transfert du précurseur non-tissé pré-compacté dans au moins une presse à double-bande pour le compactage ultérieur en un panneau de matériau dérivé du bois ; et
- du refroidissement du panneau de matériau dérivé du bois compacté dans au moins une presse de refroidissement à des températures comprises entre 10 et 70 °C.

2. Procédé selon la revendication 1, **caractérisé en ce que** la matière plastique est une matière thermoplastique, qui se présente notamment sous forme de granulés thermoplastiques ou de fibres de matière plastique.

3. Procédé selon la revendication 1 ou la revendication 2, **caractérisé en ce qu'**on utilise des fibres bicomposants en tant que matière plastique.

4. Procédé selon l'une quelconque des revendications précédentes, **caractérisé en ce qu'**en tant que matière plastique, on utilise des matières thermoplastiques choisies dans le groupe comprenant le polyéthylène (PE), le polypropylène (PP), le polychlorure de vinyle (PVC), le polyester, comme le téréphtalate de polyéthylène.

5. Procédé selon l'une quelconque des revendications précédentes, **caractérisé en ce que** le précurseur non-tissé en particules de bois et matière plastique est pré-compacté dans l'au moins un four à recuire à des températures comprises entre 130 et 200 °C, de préférence entre 150 et 180 °C, de manière particulièrement préférée, entre 160 et 170 °C.

6. Procédé selon l'une quelconque des revendications précédentes, **caractérisé en ce qu'**après la sortie du four à recuire, le précurseur non-tissé pré-compacté présente une masse volumique apparente (par ex. poids spécifique) comprise entre 40 et 200 kg/m³, de préférence entre 60 et 150 kg/m³, de manière particulièrement préférée entre 80 et 120 kg/m³.

7. Procédé selon l'une quelconque des revendications précédentes, **caractérisé en ce qu'**après la sortie du four à recuire, le précurseur non-tissé pré-compacté est refroidi et surmoulé.

8. Procédé selon l'une quelconque des revendications précédentes, **caractérisé en ce que** le précurseur non-tissé est compacté dans l'au moins une presse à double-bande à une épaisseur comprise entre 2 et 20 mm, de préférence entre 4 et 15 mm, de manière particulièrement préférée, entre 5 et 10 mm.

9. Procédé selon l'une quelconque des revendications précédentes, **caractérisé en ce que** le précurseur non-tissé pré-compacté est compacté dans l'au moins une presse à double-bande à des températures comprises entre 150 et 250 °C, de préférence entre 180 et 230 °C, de manière particulièrement préférée, entre 200 et 220 °C.

10. Procédé selon l'une quelconque des revendications précédentes, **caractérisé en ce que** le précurseur non-tissé pré-compacté est compacté dans l'au moins une presse à double-bande à une pression comprise entre 2 MPa et 10 MPa, de préférence entre 3 MPa et 8 MPa, de manière particulièrement préférée, entre 5 et 7 MPa.

11. Procédé selon l'une quelconque des revendications précédentes, **caractérisé en ce que** le panneau en matériau dérivé du bois compacté est refroidi dans l'au moins une presse de refroidissement à des températures comprises entre 20 et 40 °C.

12. Procédé selon l'une quelconque des revendications précédentes, **caractérisé en ce que** le panneau en matériau dérivé du bois compacté est refroidi dans l'au moins une presse de refroidissement à une pression qui est identique à la pression dans la presse à double-bande.

13. Procédé selon l'une quelconque des revendications précédentes, **caractérisé en ce qu'**après avoir quitté la presse de refroidissement, les panneaux en matériau dérivé du bois compactés présentent une épaisseur comprise entre 2 et 15 mm, de préférence entre 3 et 12 mm, de manière particulièrement préférée, entre 5 et 10 mm.

14. Procédé selon l'une quelconque des revendications précédentes, **caractérisé en ce que** les panneaux en matériau dérivé du bois compactés présentent une masse volumique apparente comprise entre 500 et 1500 kg/m³, de préférence entre 650 et 1300 kg/m³, de manière particulièrement préférée, entre 800 et 1100 kg/m³.
